# EUROPÄISCHE PATENTSCHRIFT

(11) **EP 1 313 392 B1**
(45) Veröffentlichungstag und Bekanntmachung des Hinweises auf die Patenterteilung: **04.05.2005**
(21) Anmeldenummer: 01937916.3
(22) Anmeldetag: 15.06.2001
(51) Int. Cl.: A47J 43/25

(54) **KÜCHENREIBE**
KITCHEN GRATER
RAPE DE CUISINE

(30) Priorität: 02.08.2000 CH 151400
(43) Veröffentlichungstag der Anmeldung: 28.05.2003
(73) Patentinhaber: MOHA MODERNE HAUSHALTWAREN AG, CH-3052 Zollikofen (CH)
(72) Erfinder: HERREN, Bruno, CH-3008 Bern (CH)
(74) Vertreter: Patentanwälte Feldmann & Partner AG
(86) Internationale Anmeldenummer: PCT/CH2001/000375
(87) Internationale Veröffentlichungsnummer: WO 2002/009565

(56) Entgegenhaltungen:
- GB-A- 1 021 720
- US-A- 5 261 613

## Beschreibung

Die vorliegende Erfindung betrifft eine Küchenreibe mit einem zylindrischen Gehäuse, welche mit einem drehfest angeordneten, aber auswechselbaren Reibeinsatz begrenzt ist, mit den Merkmalen des Oberbegriffes des Patentanspruches 1.

Küchenreiben, insbesondere Käsereiben der Eingangs genannten Art, vertreibt die Anmelderin seit vielen Jahren mit Erfolg auf dem Weltmarkt. Dank ihrem konzeptionellen Aufbau vermögen sie mehr Reibgut aufzunehmen als traditionelle Käsereiben, die zangenförmig gestaltet sind und mit einer von einer Kurbel angetriebenen Reibetrommel ausgestattet sind. Die Reibetrommel ist mit der Kurbel einstückig gestaltet, im zangenförmigen Gehäuse gehalten und leicht herausnehmbar, da sie nicht gesichert ist. Solche Küchenreiben sind nur für eine Reibefeinheit ausgelegt. Mehrere Trommeln mit unterschiedlicher Reibefeinheit werden nicht angeboten und würden auch zu viel Platz benötigen, weil sie wie erwähnt einstückig mit der Kurbel verbunden sind.

Solche Küchenreiben werden für verschiedene Lebensmittel verwendet. Die häufigste Anwendungsform ist die Verwendung zum Reiben von Käse, weshalb nachfolgend statt von Küchenreibe gleichbedeutend auch von Käsereibe gesprochen wird.

Die hier interessierende Form der Käsereiben weißt ein zylindrisches Gehäuse auf und der Reibeinsatz ist als Reibscheibe aus einem, im wesentlichen kreisscheibenförmigen ebenen Blech geformt. Das Reibgut liegt in einem im zylindrischen Gehäuse drehbar gelagerten koaxialen Aufnahmezylinder der eine diametrale Wand als Mitnahmemittel aufweist. Zentral an der Unterseite des Aufnahmezylinders ist ein Tragzapfen angeordnet, auf den die Reibscheibe gesteckt und mittels eines Splintes gesichert gehalten ist. Die Reibscheibe ist' also im montierten Zustand in axialer Richtung fest, aber drehbar am Tragzapfen gehalten und bildet sozusagen den Boden für die Aufnahme des Reibgutes im Aufnahmezylinder. Der mit Reibgut befüllte Aufnahmezylinder kann vom Benutzer in das zylindrische Gehäuse eingeführt werden, soweit bis sein unteres Ende auf einem inneren ringförmigen Absatz des Gehäuses zu liegen kommt. Die Reibscheibe weist eine Mehrzahl von peripheren Ausnehmungen auf, in die in der Gebrauchslage entsprechende Erhebungen des' ringförmigen Absatzes eingreifen. Dadurch kann die Reibscheibe in der Gebrauchslage zwar relativ zum Aufnahmezylinder, aber nicht relativ zum Gehäuse verdreht werden. In den Aufnahmezylinder kann ein axial verschiebbarer Andruckkörper, mittels dessen das Reibgut auf den Reibeinsatz drückbar ist, eingeführt werden. Der Andruckkörper hat einen diametralen Schlitz in den die diametrale Wand in der Gebrauchslage eingreift. Mittels eines Drehknaufs am oberen Ende des Andruckkörpers ist dieser drehbar und nimmt den Aufnahmezylinder mit dem Reibgut mit, wodurch dieses über den Reibeinsatz bewegt und gerieben wird.
Um verschieden feines oder grobes Reibgut zu erhalten werden verschiedene Reibscheiben angeboten. Zum Wechseln der Reibscheibe muss der Aufnahmezylinder vollständig aus dem Gehäuse entfernt und der Splint gezogen werden. Darauf hin kann der alte Reibeinsatz abgenommen und der neue Reibeinsatz aufgesteckt und mit dem Splint erneut gesichert werden. Danach kann der Aufnahmezylinder wiederum mit Reibgut gefüllt und in das Gehäuse eingeführt werden.
Diese Prozedur wird von den Benutzern zum Teil als umständlich empfunden und der Wunsch nach einer einfacheren Auswechselmöglichkeit wurde des öfteren geäussert.
Bei den bekannten Reiben muss der Aufnahmezylinder in einer genauen Radialposition in das Gehäuse eingeführt werden, da ansonsten die Erhebungen des ringförmigen Absatzes nicht in den peripheren Ausnehmungen der Reibscheibe zu liegen kommen. Wird beim Gebrauch der Aufnahmezylinder in axialer Richtung leicht angehoben, so verliert die Reibscheibe ebenfalls ihren Eingriff am 'Gehäuse. Ohne dieses Widerlager dreht sie in beiden Fällen mit Aufnahmezylinder und Reibgut mit und es wird nicht mehr gerieben. Eine derartige Küchenreibe ist in US-A-5261613 beschrieben. Es ist daher die Aufgabe der vorliegenden Erfindung eine Vorrichtung zu schaffen, welche diese Nachteile behebt, sich aber gleichzeitig den prinzipiell positiven Aufbau der bekannten Vorrichtung beibehält und seine erprobte Funktionsweise nutzt.

Es ist eine weitere Aufgabe der vorliegenden Erfindung eine Vorrichtung zur Verfügung zu stellen, mit der das zu bearbeitende Gut nicht nur gerieben sondern auch geraffelt und/oder in Scheiben geschnitten werden kann. Gleichzeitig soll es die neue Vorrichtung verhindern, dass die Reib-, Raffel oder Schneideinsätze, welche gerade nicht in Gebrauch sind verloren gehen können.

Die bekannten Geräte der Anmelderin werden hauptsächlich als Reiben, insbesondere als Käsereiben vertrieben. Im englischen Sprachraum sind sie auch als "grater" oder "cheese-mills" bekannt. Im folgenden sollen die Begriffe Reibe, reiben, Reibgut, Reibeinsatz, etc. so verstanden werden, dass sie auch für Raffeln, Schnetzeln und Hobeln stehen. Je nach Einsatztyp kann nämlich das zu bearbeitende Gut gerieben, geraffelt, geschnetzelt oder gehobelt werden.

Im Folgenden werden anhand der beiliegenden Zeichnungen Ausführungsbeispiele der Erfindung beschrieben. Es zeigen:
- Fig. 1: eine Seitenansicht einer Reibe nach der vorliegenden Erfindung;
- Fig. 2: eine Seitenansicht eines Andrückkörpers gemäss Figur 1;
- Fig. 3: einen Längsschnitt durch einen Fuss gemäss Figur 1;
- Fig. 4a: einen Längsschnitt durch einen Aufnahme zylinder gemäss Figur 1;
- Fig. 4b: eine Ansicht von unten des Aufnahmezylinders gemäss Figur 4a;
- Fig. 5a: einen Längsschnitt' durch ein Gehäuse gemäss einer Ausführungsform der Erfindung;
- Fig. 5b: eine Seitenansicht des Gehäuses gemäss Figur 5a mit Blick in den Einschubschlitz bei entferntem Einsatz;
- Fig. 5c: eine Ansicht von oben in das Gehäuse gemäss Figur 5a;
- Fig. 6a: einen Reibeinsatz;
- Fig. 6a: einen Einsatz gemäss Figur 6a im Längsschnitt entlang B-B; und
- Fig. 6a: eine Detailvergrösserung des Bereiches A aus Figur 6b.

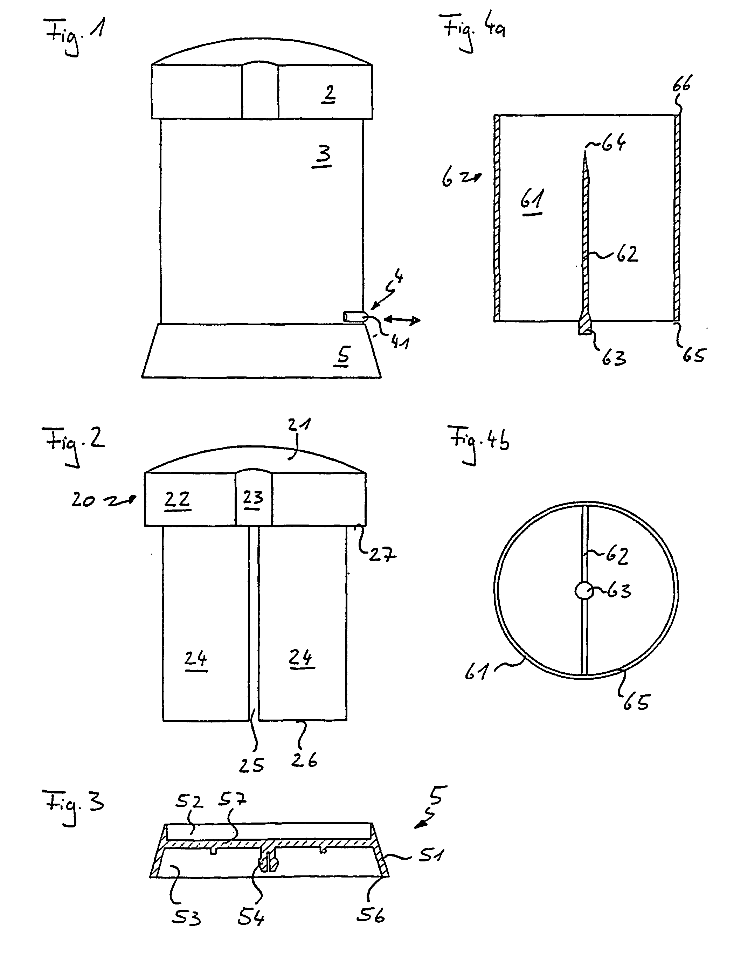

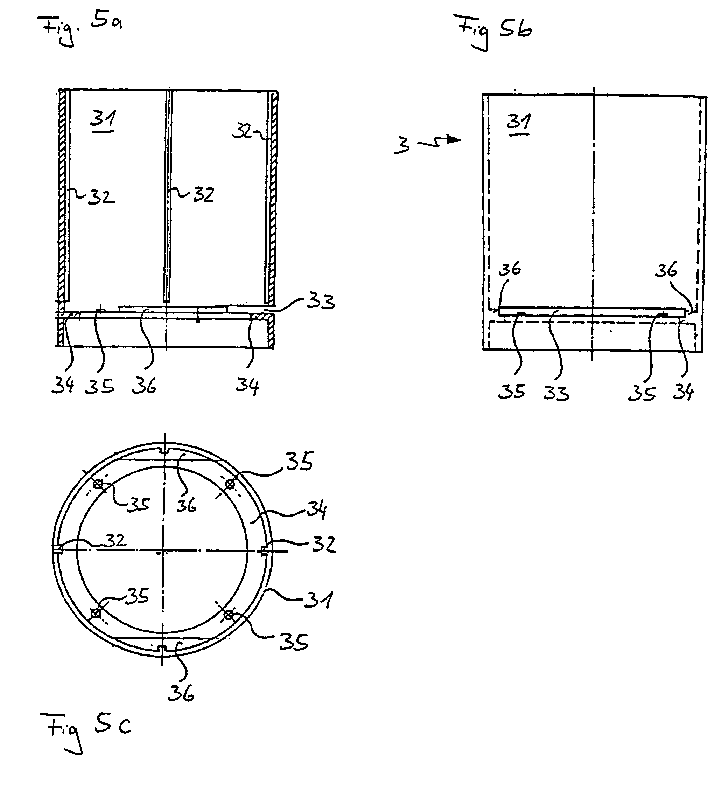

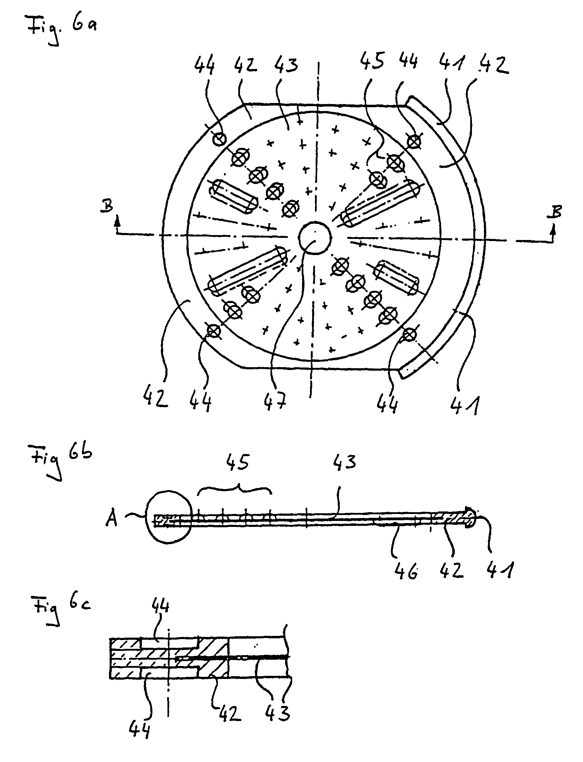

Die in der Figur 1 dargestellte Reibe 1 umfasst ein Gehäuse 3 in das von oben ein Andruckkörper 2 eingeführt ist. Die Basis des zylindrischen Gehäuses 3 steckt in einem Fuss 5, in dem sie kraftschlüssig Aufnahme findet. Ein Reibeinsatz 4 ist knapp über dem oberen Rand des Fusses 5 vollständig in das Gehäuse 3 eingeführt. Wie durch den Pfeil angedeutet ist kann der Einsatz 4 in horizontaler Richtung aus dem Gehäuse 3 gezogen werden. Wie im Folgenden noch erläutert wird, ist dies jedoch bei der in Figur 1 dargestellten Position des Andruckkörpers 2 und der daraus resultierenden Lage eines nicht dargestellten, da gänzlich im Innern des Gehäuses liegenden, Aufnahmezylinders 6 nicht möglich. In der Figur 1 ist der Andruckkörper 2 vollständig in das Gehäuse 3 eingeführt. In dieser Stellung liegt ein unterer Absatz 27 eines in der Figur 2 dargestellten Drehknaufs 20 des Andruckkörpers 2 auf einem oberen Rand 66 des in Figur 4a dargestellten Aufnahmezylinders 6 auf. Der zylindrische Anteil 24 des Andruckkörpers 2 gemäss Figur 2, der in das Gehäuse 3 einführbar ist, ist im Durchmesser so gewählt, dass zwischen Andruckzylinder 24 und Gehäusewand 31 noch der Aufnahmezylinder 6 Platz findet.
Das Gehäuse 3 gemäss einer bevorzugten Ausführungsform der Erfindung ist in den Figuren 5 a bis c dargestellt. In einem unteren Bereich des zylindrischen Gehäuses ist ein waagrechter Schlitz 33 zum Einschieben des Reibeinsatzes 4 angeordnet. Der Schlitz 33 erstreckt sich, wie aus der Figur 5b ersichtlich ist nicht ganz über den halben Gehäuseumfang. Im Inneren des Gehäuses ist ein Stützring 34 angebracht, der fluchtend mit der Unterkante des Einschiebeschlitzes 33 verläuft. Auf dem Stützring 34 sind zwei parallele in Einschieberichtung verlaufende Erhebungen 36 angeformt, die der Führung des Reibeinsatzes 4 während des Auswechseln dienen und gleichzeitig eine drehsichere Lagerung des Reibeinsatzes 4 darstellen. In einer bevorzugten Ausführungsform der Erfindung, wie sei in den Figuren 5 a bis c dargestellt ist, weist der Stützring 34 noch als Halte- und Zentriermitteln vier Nocken 35 auf, die mit entsprechenden Mitteln des Reibeinsatzes 4 formschlüssig zusammenpassen, wenn sich dieser in einer vollständig eingeschobenen Stellung im Gehäuse 3 befindet.
Im Inneren des Gehäuses 3, wie es in den Figuren 5a und 5c dargestellt ist, sind vier Längsrippen 32' bis 32''' angeordnet, welche dazu dienen den Aufnahmezylinder 6 in einer zentrierten Position im Gehäuse 3 zu halten.
Der auswechselbare Reibeinsatz 4 ist gemäss einer Ausführungsform der Erfindung als zweiseitiger Raffel- und Hobeleinsatz in den Figuren 6a bis 6c dargestellt. Eine kreisrunde metallene Reibscheibe 43 ist mit einer Kunststoffumrandung 42 versehen. Die Kunststoffumrandung 42 weist als Halte- und Zentriermittel Vertiefungen 44 auf, die mit' den bereits erwähnten Nocken 35 auf dem Stützring 34 zusammenpassen. Diese Vertiefungen sind im Detail in der Figur 6c gezeigt.
Da der Reibeinsatz 4 vorzugsweise beidseitig verwendbar ist sind die Vertiefungen 44 in der Kunststoffumrandung 42 beidseitig angebracht. Wie aus dem Schnitt 6b hervorgeht, sind auf der Oberseite des Reibeinsatzes Raffelschneiden 45 angeordnet, während sich auf der Unterseite, versetzt auf Lücke dazu Hobelschneiden 46 befinden.
Die Umrandung 42 weist einen, den Aufnahmeschlitz 33 abdeckende Randwulst 41 auf, der einerseits das Einführen und Herausziehen des Einsatzes 4 erleichtert und andererseits das Herausfallen von Reibgut durch den Schlitz 33 verhindert.
Als weitere Halte- und Zentriermittel wirken eine zentrale Oeffnung 47 der Reibscheibe 43 und ein Zentralzapfen 63 des Aufnahmezylinders 6. Ist der Reibeinsatz 4 von der Seite her vollständig in das Gehäuse 3 eingeschoben, so kann von oben her der Aufnahmezylinder 6 so weit in das Gehäuse eingeführt werden, bis der untere Rand 65 der Zylinderwand 61 auf der Kunststoffumrandung 42 des Reibeinsatzes 4 aufliegt. In dieser Position durchsetzt der Zapfen 63 des Aufnahmezylinders 6 vollständig die Oeffnung 47 in der Reibscheibe 43. Der Reibeinsatz ist also doppelt gegen ein Herausfallen gesichert.

In einer bevorzugten Ausführungsform der Erfindung Im Aufnahmezylinder 6 ist als Mitnahmemittel eine diametral verlaufende Wand 62 angeordnet, welche sich im oberen Bereich zu einer Kante 64 hin verjüngt. Im Betriebszustand der Reibe greift diese Wand 62 in einen diametral den Andrückkörper 24 durchsetzenden Schlitz 25 ein. Die Verjüngung der Wand 62 zur Kante 64 hin erleichtert das Einführen in den Schlitz 25. Durch den Eingriff wird die Drehbewegung des Drehknaufs 20 über den Andrückkörper 24 auf den Aufnahmezylinder 6 und das darin befindliche Reibgut übertragen. Beim Reiben wird vom Benutzer der Knauf 20 mit der einen und das Gehäuse 3 mit der anderen Hand gehalten. Andrückkörper 2 und Aufnahmezylinder 6 rotieren zusammen mit dem Reibgut innerhalb des Gehäuses während Andrückkörper 2 und Reibgut gleichzeitig in Richtung Reibeinsatz 4 gedrückt werden.
Der Aufnahmezylinder 6 überragt in einer bevorzugten Ausführung der Erfindung das zylindrische Gehäuse 3 mindestens geringfügig, so dass sichergestellt ist, dass beim Reiben selbst bei vollständig eingeführtem Andruckkörper, dieser nicht auf dem oberen Gehäuserand reibt und dadurch die Drehbewegung behindert. Der Aufnahmezylinder 6 hingegen liegt mit seiner Mantelwand 61, beziehungsweise deren unterem Rand 65 auf der Umrandung 42 des Reibeinsatzes 4 auf und ist dort gleitend gelagert. Die Materialien von Aufnahmezylinder 6 und/oder Umrandung 42 des Reibeinsatzes 4 sind vorzugsweise aus Kunststoff und so gewählt, dass der Reibungskoeffizient niedrig ist.
Andererseits ist der Andrückkörper 24 geringfügig kürzer als der Aufnahmezylinder 6, so dass sichergestellt ist, dass die Bodenfläche 26 des Andruckkörpers 24 nicht mit der Reibscheibe 43 in Kontakt kommen kann, gleichzeitig aber das Reibgut bis auf einen minimalen Rest gerieben werden kann.

Der Drehknauf 20 des Andruckkörpers 2 weist eine seitlich umlaufende Grifffläche 22 mit drei gleichmässig verteilten Griffmulden 23 auf. Diese Bewirken zusammen mit einer gewölbten oberen Wand 21, dass der Drehknauf 20 gut in der Hand liegt und die Reibe einfach bedient werden kann.

Wird die Reibe nicht mehr gebraucht, dann kann der Fuss 5 aufgesteckt werden, der in Figur 3 dargestellt ist. In einer bevorzugten Ausführungsform bietet der Fuss 5 mit seiner verbreiterten Basis 56 einen sicheren Stand für die Reibe. Ein Boden 57 unterteilt den Fuss 5 in einen oberen Aufnahmeraum 52, in dem die Basis des Gehäuses 3 kraftschlüssig Aufnahme findet, und einen unteren Aufnahmeraum 53, in dem überzählige Reibeinsätze auf einem zentralen Klemmzapfen 54 klemmend lösbar gehalten werden können. Dieser "doppelte" Boden 5 macht es möglich, dass die Reibeinsätze 4, welche gerade nicht benötigt werden, immer Griffbereit sind und nicht durch eine Aufbewahrung abseits von der Reibe verloren gehen können. Der Durchmesser der federnden kopfartigen Verdickung des Klemmzapfens 54 ist so auf den Durchmesser der zentralen Oeffnung 47 des Reibeinsatzes 4 abgestimmt, dass diese ohne grossen Kraftaufwand aufgesteckt und wieder gelöst werden können, aber gleichzeitig ihr sicherer Halt gewährleistet ist.

Bevorzugterweise sind alle Teile der Reibe, bis auf die Reibscheibe 43 aus Kunststoff im Spritzgussverfahren hergestellt. Die verwendeten Kunststoffmaterialien sind kostengünstig in der Herstellung und sicher und hygienisch im Gebrauch. Für das Design dieses Gebrauchsgegenstandes eröffnen sie ebenfalls viel Möglichkeiten. So kann zum Beispiel aus einer breiten Palette von Farben gewählt werden oder einzelne Teile wie Gehäuse 3 und/oder Aufnahmezylinder 6 können transparent gestaltet sein, so dass das Reibgut von aussen sichtbar ist. Edlere Materialkombinationen wie Holz, zum Beispiel für Drehknauf 20 und/oder Boden 5, oder Edelstahl für das Gehäuse sind natürlich auch möglich.
Der Boden kann entweder wie oben beschrieben, oder als einfacher flexibler Verschluss ohne weitere Kompartimentierung oder mit einem erweiterten Hohlraum 52 als Aufnahmegefäss für das Reibgut gestaltet sein.

## Patentansprüche

1. Küchenreibe mit einem zylindrischen Gehäuse (3), das endseitig von einem drehfest angeordneten, aber auswechselbaren Reibeinsatz (4) begrenzt ist, wobei im Gehäuse ein zur Aufnahme des Reibgutes dienender, drehbeweglich gelagerter Aufnahmezylinder (6) mit Mitnahmemitteln (62) gelagert ist, und dass ein axial im Aufnahmezylinder (6) beweglicher Andrückkörper (2) vorhanden ist, der formschlüssig mit den Mitnahmemitteln (62) des Aufnahmezylinders (6) in Wirkverbindung steht und einen in jeder Gebrauchslage das Gehäuse (3) und den Aufnahmezylinder (6) überragenden Drehknauf (2) aufweist, **dadurch gekennzeichnet dass** im Gehäuse (3) senkrecht zur Längsachse des Gehäuses (3) ein Einschiebeschlitz (33) angeordnet ist, durch den der auswechselbare Reibeinsatz (4) einschiebbar ist und im eingeschobenen Zustand einerseits auf einem Stützmittel (34) im Gehäuse (3) aufliegt und andererseits durch einen zentrischen Zapfen (63) am Aufnahmezylinder (6) in der Lage positioniert gehalten ist.

2. Küchenreibe nach Anspruch 1, **dadurch gekennzeichnet, dass** das Stützmittel ein fluchtend mit der Unterkante des Einschiebeschlitzes (33) verlaufender Stützring (34) ist.

3. Küchenreibe nach Anspruch 2, **dadurch gekennzeichnet, dass** auf dem Stützring (34) zwei parallele in Einschieberichtung verlaufende Erhebungen (36) angeformt sind, die der Führung des Reibeinsatzes (4) während des Auswechselns dienen und gleichzeitig eine drehsichere Lagerung des Reibeinsatzes (4) darstellen.

4. Küchenreibe nach Anspruch 2, **dadurch gekennzeichnet, dass** der auswechselbare Reibeinsatz (4) ein mit einer Kunststoffumrandung (42) versehene, metallene Reibscheibe (43) ist, wobei die Kunststoffumrandung (43) Halte- und Zentriermittel (44) aufweist, die mit korrespondierenden Halte- und Zentriermitteln (35) auf dem Stützring (34) passen zusammenwirken.

5. Küchenreibe nach Anspruch 4, **dadurch gekennzeichnet, dass** die Formschlussmittel (44) Vertiefungen in der Kunststoffumrandung (42) und passenden Nocken (35) auf dem Stützring (34) sind.

6. Küchenreibe nach Anspruch 4, **dadurch gekennzeichnet, dass** der Reibeinsatz (4) beidseitig verwendbar ist und die Halte- und Zentriermittel (44) in der Kunststoffumrandung (42) beidseitig angebracht sind.

7. Küchenreibe nach Anspruch 4, **dadurch gekennzeichnet, dass** die Kunststoffumrandung (42) einen den Aufnahmeschlitz (33) abdeckenden Randwulst (41) aufweist.

8. Küchenreibe nach Anspruch 4, **dadurch gekennzeichnet, dass** der Aufnahmezylinder (6) mit einer Unterseite (65) seiner Mantelwand (61) auf der Umrandung (42) des Raffeleinsatzes (4) gleitend lagert.

9. Küchenreibe nach Anspruch 1, **dadurch gekennzeichnet, dass** der Aufnahmezylinder (6) das zylindrische Gehäuse (3) mindestens geringfügig überragt, während der Andrückkörper (24) kürzer ist als der Aufnahmezylinder (6) in dem als Mitnahmemittel eine diametral verlaufende Wand (62) angeordnet ist, die im Betriebszustand der Küchenreibe in einen diametral den Andrückkörper durchsetzenden Schlitz (25) eingreift.

10. Küchenreibe nach Anspruch 1, **dadurch gekennzeichnet, dass** ein Fuss (5) vorhanden ist in dem das zylindrische Gehäuse (3) kraftschlüssig Aufnahme findet und der einen unteren Aufnahmeraum (53) aufweist, in dem Reibeinsätze (4) auf einem zentralen Klemmzapfen (54) klemmend lösbar befestigbar sind.

## Claims

1. A kitchen grater with a cylindrical housing (3) which on the end side is limited by a grating insert (4) which is arranged in a rotationally fixed manner but is exchangeable, wherein in the housing there is mounted a receiving cylinder (6) with entraining means (62), said receiving cylinder serving the accommodation of the grating product and being rotationally movably mounted, and wherein there is present a pressing body (2) which is axially movable in the receiving cylinder (6), is in a positive-fit active connection with the entraining means (62) of the receiving cylinder (6) and comprises a rotary knob (2) projecting beyond the receiving cylinder (6), **characterised in that** in the housing (3) perpendicular to the longitudinal axis of the housing (3) there is arranged an insertion slot (33) through which the exchangeable grating insert (4) is insertable which in the inserted condition on the one hand rests on a support means (34) in the housing (3) and on the other hand is held in the position in a positioned manner by a centric peg (63) on the receiving cylinder (6).

2. A kitchen grater according to claim 1, **characterised in that** the support means is a support ring (34) running flush with the lower edge of the insertion slot (33).

3. A kitchen grater according to claim 2, **characterised in that** on the support ring (34) there are formed two elevations running parallel in the insertion direction, which serve the guiding of the grating insert (4) during the exchange and simultaneously represent a rotationaly secure mounting of the grating insert (4).

4. A kitchen grater according to claim 2, **characterised in that** the exchangeable grating insert (4) is a metal grating disk (43) provided with a plastic bordering (42), wherein the plastic bordering (43) comprises holding and centering means (44) which cooperate with corresponding holding and centering means (35) on the support ring (34).

5. A kitchen grater according to claim 4, **characterised in that** the positive fit means are deepenings in the plastic bordering (42) and fitting cams (35) on the support ring (34).

6. A kitchen grater according to claim 4, **characterised in that** the grating insert (4) is usable on both sides and the holding and centering means (44) in the plastic bordering (42) is incorportated on both sides.

7. A kitchen grater according to claim 4, **characterised in that** the plastic bordering (42) comprises an edge bulge (41) covering the receiving slot (33).

8. A kitchen grater according to claim 4, **characterised in that** the receiving cylinder (6) with a lower side (65) of its surface wall (61) slidingly bears on the bordering (42) of the rasping insert (4).

9. A kitchen grater according to claim 1, **characterised in that** the receiving cylinder (6) at least slightly projects beyond the cylindrical housing (3), whilst the pressing body (24) is shorter than the receiving cylinder (6) in which as an entraining means there is arranged a diametrically running wall (62) which in the operating condition of the kitchen grater engages into a diametrical slot (25) passing through the pressing body.

10. A kitchen grater according to claim 1, **characterised in that** there is present a foot (5) in which the cylindrical housing (3) finds a non-positive accommodation and which comprises a lower receiving space (53) in which grating inserts (4) are fastenable in a clampingly releasable manner on a central clamping peg (54).

## Revendications

1. Râpe de cuisine avec une boîte (3) cylindrique qui est limitée à son extrémité par un insert de râpage (4) placé de façon à résister à la torsion, mais susceptible d'être remplacé, auquel cas, un cylindre de recueil (6) avec des moyens d'accrochage (62) est logé dans la boîte (3) de façon à être mobile par rotation et servant pour la réception du produit de râpage et qu'un corps presseur (2) axialement mobile dans le cylindre de recueil (6) est disponible qui est dans une relation d'activation par liaison de forme avec les moyens d'accrochage (62) du cylindre de recueil (6) et qui présente un bouton de rotation dans chaque position d'emploi étant en saillie par rapport à la boîte (3) et au cylindre de recueil (6), **caractérisée par le fait qu'**un canal coulissant (33) est placé dans la boîte (3) perpendiculairement par rapport à l'axe longitudinal de la boîte (3), à travers lequel l'insert de râpage (4) susceptible d'être remplacé est susceptible d'être inséré et, dans l'état inséré, il s'appuie d'un côté à un moyen de support (34) dans la boîte (3) et d'un autre côté il est maintenu positionné dans l'état au cylindre de recueil (6) par un tourillon (63) central.

2. Râpe de cuisine selon la revendication 1, **caractérisée par le fait que** le moyen de support est une bague d'appui (34) en alignement avec le bord inférieur du canal coulissant (33).

3. Râpe de cuisine selon la revendication 2, **caractérisée par le fait que** deux élévations (36) parallèles, s'écoulant dans la direction d'insertion, sont surmoulées sur la bague d'appui (34) et ces élévations (36) servent au guidage de l'insert de râpage (4) pendant le remplacement et elles constituent en même temps un logement à preuve de rotation de l'insert de râpage (4).

4. Râpe de cuisine selon la revendication 2, **caractérisée par le fait que** l'insert de râpage remplaçable (4) est un disque de râpage (43) métallique pourvu d'un bord en matière synthétique (42), auquel cas le bord en matière synthétique (43) présente des moyens de retenue et de centrage (44) qui agissent conjointement avec des moyens de retenue et centrage (35) correspondant étant adaptés à la bague d'appui (34).

5. Râpe de cuisine selon la revendication 4, **caractérisée par le fait que** les moyens par liaison de forme (44) sont des creusements dans le bord en matière synthétique (42) et des mentonnets (35) adaptés sur la bague d'appui (34).

6. Râpe de cuisine selon la revendication 4, **caractérisée par le fait que** l'insert de râpage (4) est utilisable des deux côtés et que les moyens de retenue et de centrage (44) dans le bord en matière synthétique (42) sont agencés des deux côtés.

7. Râpe de cuisine selon la revendication 4, **caractérisée par le fait que** le bord en matière synthétique (42) présente un renforcement marginal (41) recouvrant le canal coulissant (33).

8. Râpe de cuisine selon la revendication 4, **caractérisée par le fait que** le cylindre de recueil (6) avec une face inférieure (65) loge de façon coulissante sa paroi de revêtement (61) sur le bord (42) de l'insert de râpage (4).

9. Râpe de cuisine selon la revendication 1, **caractérisée par le fait que** le cylindre de recueil (6) dépasse au moins légèrement la boîte (3) cylindrique, tandis que le corps presseur (24) est plus court que le cylindre de recueil (6) dans lequel est placée une paroi (62) s'écoulant diamétralement et fonctionnant en tant que moyen d'accrochage qui, dans l'état de fonctionnement de la râpe de cuisine, s'accroche dans une fissure (25) diamétrale s'entremêlant au corps presseur.

10. Râpe de cuisine selon la revendication 1, **caractérisée par le fait qu'**un pied (5) est disponible dans lequel la boîte (3) cylindrique trouve un logement par liaison de force et qui présente un secteur de logement (53) inférieur, dans lequel des inserts de râpage (4) sont susceptible d'être fixés par serrage de façon amovible sur un tourillon de serrage (54) central.
